# EUROPEAN PATENT SPECIFICATION

(11) **EP 4 542 731 B1**
(45) Date of publication and mention of the grant of the patent: **26.08.2026**
(21) Application number: 23918158.9
(22) Date of filing: 21.04.2023
(51) Int. Cl.: H01M 10/6556, H01M 10/6568, H01M 10/613, H01M 10/647

(54) **HEAT MANAGEMENT ASSEMBLY, BATTERY, AND ELECTRICAL APPARATUS**
WÄRMEVERWALTUNGSANORDNUNG, BATTERIE UND ELEKTRISCHE VORRICHTUNG
ENSEMBLE DE GESTION DE CHALEUR, BATTERIE ET APPAREIL ÉLECTRIQUE

(30) Priority: 28.01.2023 CN 202320082603 U
(43) Date of publication of application: 23.04.2025
(73) Proprietor: Contemporary Amperex Technology (Hong Kong) Limited, Hong Kong (HK)
(72) Inventor: LI, Xiang, Ningde, Fujian 352100 (CN); HUANG, Xiaoteng, Ningde, Fujian 352100 (CN); LI, Xingxing, Ningde, Fujian 352100 (CN); SONG, Feiting, Ningde, Fujian 352100 (CN)
(74) Representative: Lorenz Seidler Gossel Part. mbB
(86) International application number: PCT/CN2023/089936
(87) International publication number: WO 2024/156156

(56) References cited:
- EP-A1- 4 579 875
- CN-A- 111 082 183
- CN-A- 111 934 052
- CN-A- 114 665 188
- CN-U- 218 002 294
- JP-A- H01 144 575
- US-B2- 11 211 649

## Description

The present application claims priority to Chinese Patent Application No. 202320082603.5, entitled "HEAT MANAGEMENT ASSEMBLY, BATTERY, AND ELECTRICAL APPARATUS" filed on January 28, 2023.

### TECHNICAL FIELD

The present application relates to the field of battery technology, in particular to a heat management assembly, a battery, and an electrical apparatus.

### BACKGROUND

Batteries are widely used in electronic devices, such as mobile phones, laptops, electric scooters, electric cars, electric airplanes, electric ships, electric toy cars, electric toy ships, electric toy planes, and electric tools. The batteries may include cadmium nickel batteries, hydrogen nickel batteries, lithium-ion batteries, secondary alkaline zinc manganese batteries, etc.

In the development of battery technology, how to effectively manage the heat of the battery and improve the heat exchange effect is an important research direction in battery technology. Post-published document EP 4 579 875 A1, prior art in the sense of Art. 54(3) EPC, discloses a thermal management assembly comprising a heat exchange plate, two baffles, and two fluid collectors located on both sides of the heat exchange plate, where the baffles are placed between the heat exchange plate and the fluid collectors. Further prior art is known from US 11 211 649 B2, CN 114 665 188 A which discloses the features of the preamble of claim 1, CN 111 082 183 A, CN 218 002 294 U, CN 111 934 052 A and JP H01 144575 A.

### SUMMARY

Embodiments of the present application provide a heat management assembly, a battery, and an electrical apparatus, where the heat exchange effect of the battery can be improved.

In a first aspect, an embodiments of the present application provide a heat management assembly for a battery. The heat management assembly has a liquid inlet and a liquid outlet, the heat management assembly includes a heat exchange plate and a first partition plate, the heat exchange plate is formed with a plurality of heat exchange channels that are arranged in a first direction and allow a heat exchange medium to flow, the heat exchange channels extend in a second direction, and the first direction intersects with the second direction; the first partition plate is disposed at one end of the heat exchange plate in the second direction, and the first partition plate is to block a portion of the liquid inlet, so that at least part of the heat exchange channels are connected in series with one another.

In the above solutions, the first partition plate is disposed at the end of the heat exchange plate to block the portion of the liquid inlet of the heat management assembly, so that the heat exchange medium can only flow in from part of the heat exchange channels and then flow out from the other heat exchange channels, some or all of the heat exchange channels are connected in series, and the heat exchange channels connected in series have the same flow rate, thereby mitigating uneven heating of battery cells, improving the temperature consistency of the battery cells, and enhancing the heat exchange effect of a battery.

In some embodiments, the heat management assembly further includes a first fluid collector formed with the liquid inlet, and the first partition plate is disposed between the first fluid collector and the heat exchange plate.

In the above solutions, the heat exchange medium in the first fluid collector enters the heat exchange channels of the heat exchange plate via the liquid inlet, where the first fluid collector has the function of collecting the heat exchange medium, which facilitates the transmission of the heat exchange medium.

In some embodiments, the first fluid collector includes a connecting portion and a fluid-collecting portion connected to each other, the connecting portion is provided with a connecting pipe allowing the heat exchange medium to pass through, and the liquid inlet is formed between the connecting portion and the fluid-collecting portion.

In the above solutions, the heat exchange medium flows from the connecting pipe into the fluid-collecting portion, and then enters the heat exchange channels of the heat exchange plate from the liquid inlet. Adjacent first fluid collectors can be connected by the connecting pipes, and the battery cells can be disposed between the first fluid collectors to implement heat exchange on two opposite sides of the battery cells, so as to improve the heat exchange efficiency.

According to the present invention, the first partition plate includes a first plate body and a first abutting portion, where the first abutting portion protrudes from the first plate body in a direction away from the heat exchange plate; the first plate body is provided with first through holes allowing the heat exchange medium to pass through, and the first abutting portion is to block the portion of the liquid inlet.

In the above solutions, the first abutting portion protruding from the first partition plate blocks a portion of the liquid inlet, which achieves a simple structure and can reduce costs.

In some embodiments, the first plate body blocks part of the heat exchange channels, so that the blocked heat exchange channels can be connected in series with the other heat exchange channels, which can provide more series connection methods and improve the temperature uniformity of the battery cells.

In some embodiments, the first plate body is provided with first insertion portions protruding in a direction away from the first abutting portion, and the first insertion portions are inserted into the blocked heat exchange channels.

In the above solutions, the first insertion portions disposed on the first partition plate are inserted into the heat exchange channels, which can block the heat exchange channels and assemble the first partition plate onto the heat exchange plate to achieve initial positioning between the first partition plate and the heat exchange plate.

In some embodiments, the first plate body blocks the heat exchange channel located at an end of the heat exchange plate in the first direction, which can increase the strength of the edge of the heat exchange plate and reduce the probability of leakage of the heat exchange medium due to the breakage of the edge of the heat exchange plate.

In some embodiments, the heat management assembly further includes a second partition plate, the second partition plate is disposed at the other end of the heat exchange plate in the second direction, and the second partition plate is to block a portion of the liquid outlet. The cooperation between the first partition plate and the second partition plate facilitates the series connection of more heat exchange channels.

In some embodiments, the heat management assembly further includes a second fluid collector formed with the liquid outlet, and the second partition plate is disposed between the second fluid collector and the heat exchange plate.

In the above solutions, the heat exchange medium in the heat exchange channels flows into the second fluid collector from the liquid outlet, where the second fluid collector has the function of collecting the heat exchange medium, which facilitates the transmission of the heat exchange medium.

In some embodiments, the second partition plate includes a second plate body and a second abutting portion, where the second abutting portion protrudes from the second plate body in a direction towards the second fluid collector; the second plate body is provided with second through holes allowing the heat exchange medium to pass through, and the second abutting portion is to block the portion of the liquid outlet.

In the above solutions, the second abutting portion protruding from the second partition plate blocks a portion of the liquid outlet, which achieves a simple structure and can reduce costs.

In some embodiments, the first fluid collector and the second fluid collector are in reflective symmetry with respect to the heat exchange plate, so that the heat exchange channels can be easily connected in series, the first fluid collector and the second fluid collector having the same structure are flipped during assembly, and the first fluid collector and the second fluid collector that are different are not needed, which facilitates process production, improves production efficiency, and reduces costs.

In some embodiments, the first partition plate and the second partition plate block the two ends of the part of the heat exchange channels respectively, which can reduce the usage amount of the heat exchange medium, energy consumption, and the weight of the heat exchange plate.

In a second aspect, an embodiment of the present application provides a battery, including battery cells and
the heat management assembly according to any of the above implementations, where the heat management assembly is to adjust the temperature of the battery cells.

In some embodiments, the battery comprises a plurality of heat management assemblies spaced apart, and the battery cells each are disposed between two adjacent ones of the heat management assemblies, which can exchange heat on two opposite sides of the battery cells to improve heat exchange efficiency.

In a third aspect, an embodiment of the present application provides an electrical apparatus, including the battery according to any of the above implementations for providing electrical energy.

The above description is only a summary of the technical solutions of the present application. In order to understand the technical means in the present application more clearly, it can be implemented in accordance with the content of the specification; and in order to make the above and other objectives, features and advantages of the present application more obvious and easier to understand, and specific implementations of the present application are cited below.

### BRIEF DESCRIPTION OF THE DRAWINGS

In order to illustrate the technical solutions in the embodiments of the present application more clearly, the drawings to be used in the embodiments of the present application will be briefly described below. Apparently, the drawings described below are merely some embodiments of the present application, and those skilled in the art can obtain other drawings based on these drawings without any creative work.
FIG. 1 is a schematic view of a vehicle in some embodiments of the present application;
FIG. 2 is a schematic structural view of a battery in some embodiments of the present application;
FIG. 3 is an exploded view of a heat management assembly in some embodiments of the present application;
FIG. 4 is a schematic structural view of the heat management assembly in some embodiments of the present application;
FIG. 5 is a side view of the heat management assembly in some embodiments of the present application;
FIG. 6 is a cross-sectional view of FIG. 5 along a B-B direction;
FIG. 7 is a partial structural view of a battery in some embodiments of the present application;
FIG. 8 is a schematic structural view of a first fluid collector in some embodiments of the present application;
FIG. 9 is a schematic structural view of a first partition plate in some embodiments of the present application;
FIG. 10 is a partial side view of the heat management assembly in some embodiments of the present application;
FIG. 11 is a side view of the first partition plate in some embodiments of the present application;
FIG. 12 is a side view of the first partition plate in some embodiments of the present application from another perspective;
FIG. 13 is a cross-sectional view of FIG. 12 along a C-C direction;
FIG. 14 is a schematic structural view of a second partition plate in some embodiments of the present application;
FIG. 15 is another partial side view of the heat management assembly in some embodiments of the present application; and
FIG. 16 is a schematic structural view of a second fluid collector in some embodiments of the present application.

Reference numeral are as follows:
Vehicle 1000; Battery 100; Controller 200; Motor 300; Upper cover 10; Battery cell 20; Box 30; Heat management assembly 400; Liquid inlet 400a; Liquid outlet 400b; First communication port 400c; Second communication port 400d; Heat exchange plate 40; Heat exchange channel 40a; First partition plate 50; First plate body 51; First through hole 511; First abutting portion 52; First insertion portion 53; First fluid collector 60; Connecting portion 61; Connecting pipe 611; Fluid-collecting portion 62; First side wall segment 621; Second side wall segment 622; Second partition plate 70; Second plate body 71; Second abutting portion 72; Second insertion portion 73; Second fluid collector 80; First direction X; Second direction Y.

### DETAILED DESCRIPTION

Implementations of the present application will be further described in detail below in conjunction with the drawings and embodiments. The detailed description of the following embodiments and the drawings are used for illustrating the principle of the present application exemplarily, but cannot be used for limiting the scope of the present application, that is, the present application is not limited to the described embodiments.

In the description of the present application, it should be noted that, unless otherwise specified, "plurality of" means two or more; the orientations or positional relationships indicated by the terms "upper", "lower", "left", "right", "inner", "outer", etc. are only for facilitating description of the present application and simplifying the description, but do not indicate or imply that the pointed apparatuses or elements must have specific orientations or be constructed and operated in specific orientations. Therefore, the terms should not be understood to limit the present application. In addition, the terms "first", "second", "third", and the like are for descriptive purposes only and should not be understood as indicating or implying relative importance. "Vertical" is not strictly vertical, but within an allowable range of error. "Parallel" is not strictly parallel, but within an allowable range of error.

The "embodiment" mentioned in the present application means that specific features, structures or characteristics described in conjunction with the embodiment may be included in at least one embodiment of the present application. The phrase appearing at various places in the description does not necessarily refer to the same embodiment, or an independent or alternative embodiment exclusive of other embodiments. Those skilled in the art understand explicitly and implicitly that an embodiment described in the present application may be combined with other embodiments.

The orientation terms appearing in the following description all indicate directions shown in the drawings, and are not intended to limit specific structures of the present application. In the description of the present application, it should be noted that, unless otherwise specified and defined, the terms "mounted", "connected", and "connection" should be understood in a broad sense, for example, the "connection" may be fixed connected, detachable connection, integral connection, direct connection, or indirect connection by a medium. Those skilled in the art could understand the specific meanings of the above terms in the present application according to specific circumstances.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, cubic battery cells, and soft package battery cells, which are also not limited by the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box for packaging one or more battery cells. The box may prevent liquid or other foreign matters from affecting charging or discharging of the battery cell.

The battery cell includes an electrode assembly and an electrolytic solution, where the electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer, a surface of the positive electrode current collector is coated with the positive electrode active material layer, and the current collector not coated with the positive electrode active material layer protrudes from the current collector coated with the positive electrode active material layer and is laminated as a positive electrode tab. Taking an example of a lithium-ion battery, a material of the positive electrode current collector may be aluminum, and a positive electrode active material may be lithium cobaltate, lithium iron phosphate, ternary lithium, lithium manganate, or the like. The negative electrode plate includes a negative electrode current collector and a negative electrode active material layer, a surface of the negative electrode current collector is coated with the negative electrode active material layer, and the current collector not coated with the negative electrode active material layer protrudes from the current collector coated with the negative electrode active material layer and is laminated as a negative electrode tab. A material of the negative electrode current collector may be copper, and a negative electrode active material may be carbon, silicon, or the like. A material of the separator may be polypropylene (PP), polyethylene (PE), or the like. Moreover, the electrode assembly may be of a wound structure or a laminated structure, and the embodiments of the present application are not limited thereto.

The battery cell disclosed in the embodiments of the present application may be used, but not limited to, in an electrical apparatus such as a vehicle, a ship, or an aircraft. A power system of the electrical apparatus may be constituted by the battery cells, the battery, or the like disclosed in the present application, which is beneficial to improving the stability of battery performance and prolonging battery life.

The inventor noticed that a battery exhibits different electrical cycle performance at different ambient temperatures. When the ambient temperature is too high or too low, the cycle performance of the battery declines, and even the service life of the battery is shortened. In order to ensure the safety, stable performance, and optimal operation of a new energy vehicle, effective heat management is necessary to control the battery to always work within a suitable temperature range. The inventor disposed a heat exchange plate inside the battery, where the heat exchange plate is to exchange heat with battery cells of the battery to effectively manage the heat of the battery and ensure that the battery cells work within the suitable temperature range. After further research, it was found that the heat exchange plate has a plurality of heat exchange channels, which independently transport a heat exchange medium and are connected in parallel to one another. Due to the influence of gravity, there is usually more heat exchange medium in the bottom of the heat exchange plate that is usually in a vertical state, resulting in an imbalance of flow between the heat exchange channels and poor temperature consistency of the battery cells, which reduces the heat exchange effect of the battery.

In order to solve the problem of poor temperature consistency of battery cells and reduced heat exchange effect of the battery, the inventor conducted in-depth research and designed a heat management assembly, where the heat management assembly has a liquid inlet and a liquid outlet and includes a heat exchange plate and a first partition plate, the heat exchange plate is formed with a plurality of heat exchange channels that are arranged in a first direction and allow a heat exchange medium to flow, the heat exchange channels extend in a second direction, and the first direction intersects with the second direction; the first partition plate is disposed at one end of the heat exchange plate in the second direction, and the first partition plate is to block a portion of the liquid inlet, so that at least part of the heat exchange channels are connected in series with one another. In the above solutions, the first partition plate is disposed at the end of the heat exchange plate to block the portion of the liquid inlet of the heat management assembly, so that the heat exchange medium can only flow in from part of the heat exchange channels and then flow out from the other heat exchange channels, some or all of the heat exchange channels are connected in series, and the heat exchange channels connected in series have the same flow rate, thereby mitigating uneven heating of battery cells, improving the temperature consistency of the battery cells, and enhancing the heat exchange effect of a battery.

The battery cell disclosed in the embodiments of the present application may be used, but not limited to, in an electrical apparatus such as a vehicle, a ship, or an aircraft. A power system of the electrical apparatus may be constituted by the battery cells, the battery, or the like disclosed in the present application, which is beneficial to improving the stability of battery performance and prolonging battery life.

An embodiment of the present application provides an electrical apparatus using a battery as a power supply. The electrical apparatus may be, but is not limited to, a mobile phone, a tablet computer, a notebook computer, an electric toy, an electric tool, a scooter, an electric vehicle, a ship, or a spacecraft, etc. The electric toy may include a fixed or mobile electric toy, such as a game console, an electric car toy, an electric ship toy, or an electric aircraft toy. The spacecraft may include an airplane, a rocket, a space shuttle, a spaceship, etc.

For convenient description, the following embodiments are described by an example of a vehicle 1000 as an electrical apparatus in an embodiment of the present application.

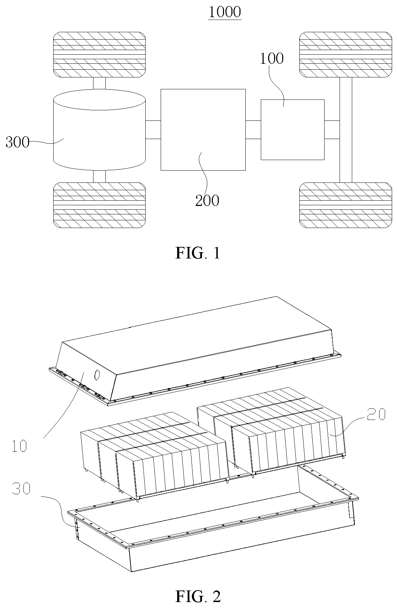

Referring to FIG. 1, FIG. 1 is a schematic structural view of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed in the bottom, front or rear of the vehicle 1000. The battery 100 may be for supplying power to the vehicle 1000. For example, the battery 100 may be used as an operation power supply of the vehicle 1000. The vehicle 1000 may further include a controller 200 and a motor 300. The controller 200 is to control the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery 100 provided in some embodiments of the present application. The battery 100 includes a battery box and battery cells 20. In some embodiments, the battery box may include an upper cover 10 and a box 30, the upper cover 10 and the box 30 are closed to each other, and the upper cover 10 and the box 30 jointly define an accommodating cavity for accommodating the battery cells 20. The box 30 may be of a hollow structure with one end open, the upper cover 10 may be of a plate-like structure, and the upper cover 10 fits on the open side of the box 30, so that the upper cover 10 and the box 30 jointly define the accommodating cavity. Alternatively, both the upper cover 10 and the box 30 may be of hollow structures with one side open, and the open side of the upper cover 10 fits on the open side of the box 30. The battery box formed by the upper cover 10 and the box 30 may be in various shapes, such as cylindrical or rectangular.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box. Alternatively, the battery 100 may be in the form of a battery module formed by connecting the plurality of battery cells 20 in series, in parallel, or in series and parallel, and a plurality of battery modules are then connected in series, in parallel, or in series and parallel to form a whole accommodated in the box. The battery 100 may further include other structures, for example, the battery 100 may further include a busbar for achieving electrical connection among the plurality of battery cells 20.

Each battery cell 20 may be a secondary battery cell or a primary battery cell, or may be a lithium-sulfur battery cell, a sodium-ion battery cell, or a magnesium-ion battery cell, but is not limited to this. The battery cells 20 may be cylindrical, flat, cuboid, or in other shapes.

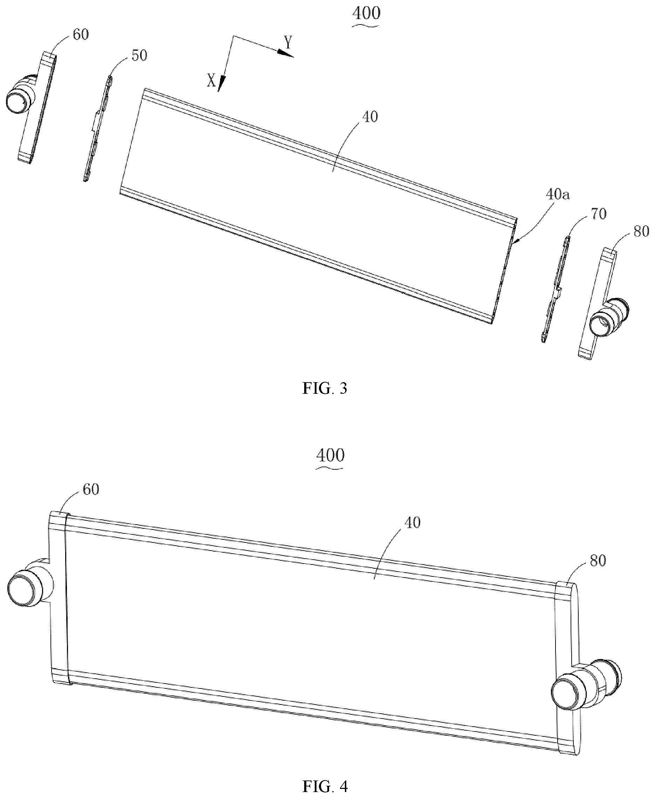

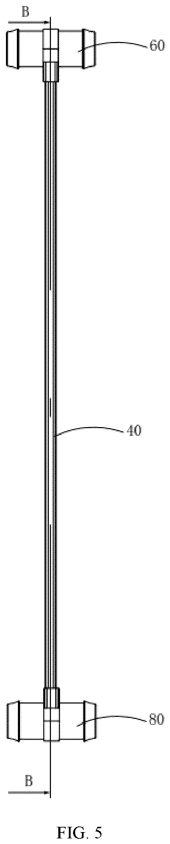

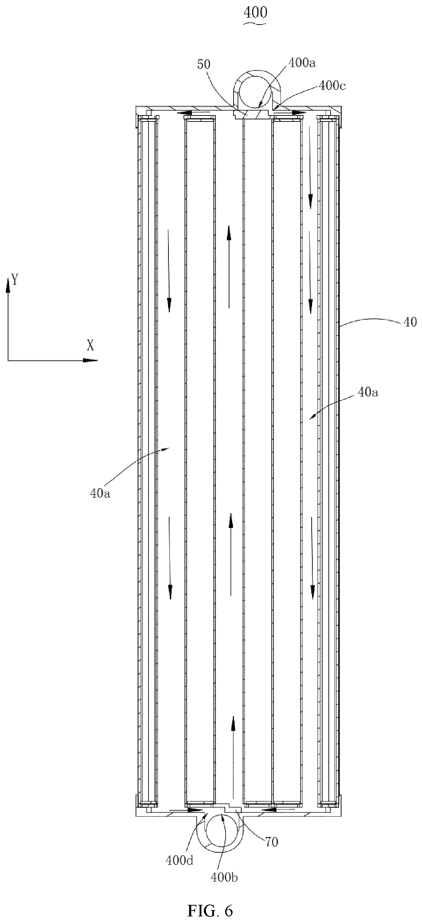

FIG. 3 is an exploded view of a heat management assembly in some embodiments of the present application; FIG. 4 is a schematic structural view of the heat management assembly in some embodiments of the present application; FIG. 5 is a side view of the heat management assembly in some embodiments of the present application; and FIG. 6 is a cross-sectional view of FIG. 5 along a B-B direction.

Referring to FIG. 3 to FIG. 6, in a first aspect, the embodiments of the present application provides a heat management assembly 400. The heat management assembly 400 has a liquid inlet 400a and a liquid outlet 400b, the heat management assembly 400 includes a heat exchange plate 40 and a first partition plate 50, the heat exchange plate 40 is formed with a plurality of heat exchange channels 40a that are arranged in a first direction X and allow a heat exchange medium to flow, the heat exchange channels 40a extend in a second direction Y, and the first direction X intersects with the second direction Y; the first partition plate 50 is disposed at one end of the heat exchange plate 40 in the second direction Y, and the first partition plate 50 is to block a portion of the liquid inlet 400a, so that at least part of the heat exchange channels 40a are connected in series with one another.

The heat exchange medium may be liquid such as water or ethylene glycol, and the temperature of the heat exchange medium may be adjusted. When the temperature of the battery cells 20 is too high, the heat exchange medium can cool the battery cells 20; and when the temperature of the battery cells 20 is too low, the heat exchange medium can heat the battery cells 20, thereby prolonging the service life of the battery 100.

The first direction X may be a vertical direction of the battery 100, the second direction Y may be a width direction of the battery 100, and the first direction X and the second direction Y are perpendicular to each other.

The first partition plate 50 and the heat exchange plate 40 may be fixed by welding, bonding, clamping, etc. A fluid collector may be disposed at an end of the heat exchange plate 40, the heat exchange medium flows into the heat exchange channels 40a of the heat exchange plate 40 through the fluid collector, and the liquid inlet 400a is located in the fluid collector. Alternatively, the fluid collector may be eliminated, the heat exchange plate 40 is directly connected to a side beam of the battery box, and the liquid inlet 400a is disposed on the side beam.

The first partition plate 50 blocks a portion of the liquid inlet 400a, and the unblocked portion of the liquid inlet 400a is a first communication port 400c. The heat exchange medium enters a heat exchange channel 40a through the first communication port 400c and cannot enter the other heat exchange channels 40a. Instead, the heat exchange medium needs to pass through the heat exchange channel 40a in communication with the first communication port 400c and then flows into the other heat exchange channels 40a so that a channel in which the heat exchange channels 40a are connected in series is formed. Alternatively, the heat exchange medium enters several heat exchange channels 40a through the first communication port 400c, and then flow into other heat exchange channels 40a through these heat exchange channels 40a so that several channels in each of which the heat exchange channels 40a are connected in series are formed.

Exemplarily, only part of the heat exchange channels 40a are connected in series, and the other heat exchange channels 40a are connected in parallel; or some heat exchange channels 40a are connected in series, and the other heat exchange channels 40a are connected in series so that several channels in each of which the heat exchange channels 40a are connected in series are formed; or all the heat exchange channels 40a are sequentially connected in series so that a complete bent channel in which the heat exchange channels 40a are connected in series is formed. Specifically, the channel formed by the heat exchange channels 40a connected in series may be roughly U-shaped, S-shaped, M-shaped, or in other shapes.

In the above solutions, the first partition plate 50 is disposed at the end of the heat exchange plate 40 to block the portion of the liquid inlet 400a of the heat management assembly 400, so that the heat exchange medium can only flow in from part of the heat exchange channels 40a and then flow out from the other heat exchange channels 40a, some of the heat exchange channels 40a or all of the heat exchange channels 40a are connected in series, and the heat exchange channels 40a connected in series have the same flow rate, thereby mitigating uneven heating of the battery cells 20, improving the temperature consistency of the battery cells 20, and enhancing the heat exchange effect of the battery 100.

In some embodiments, the heat management assembly 400 further includes a first fluid collector 60 formed with the liquid inlet 400a, and the first partition plate 50 is disposed between the first fluid collector 60 and the heat exchange plate 40.

In the above solutions, the first fluid collector 60 is disposed at an end of the heat exchange plate 40, and the first fluid collector 60, the first partition plate 50, and the heat exchange plate 40 can be fixed by welding, bonding, clamping, or interference fit. The heat exchange medium in the first fluid collector 60 enters the heat exchange channels 40a of the heat exchange plate 40 via the liquid inlet 400a, where the first fluid collector 60 has the function of collecting the heat exchange medium, which facilitates the transmission of the heat exchange medium.

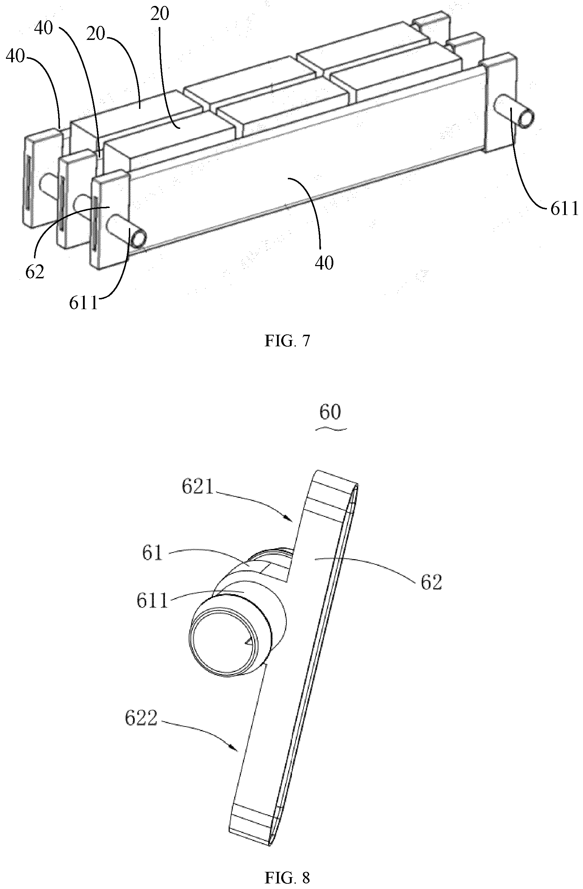

FIG. 7 is a partial structural view of a battery in some embodiments of the present application; and FIG. 8 is a schematic structural view of a first fluid collector in some embodiments of the present application.

Referring to FIG. 7 and FIG. 8, in some embodiments, the first fluid collector 60 includes a connecting portion 61 and a fluid-collecting portion 62 connected to each other, the connecting portion 61 is provided with a connecting pipe 611 allowing the heat exchange channels 40a to pass through, and the liquid inlet 400a is formed between the connecting portion 61 and the fluid-collecting portion 62.

The first fluid collector 60 may be an integrally formed structure, the fluid-collecting portion 62 may be sleeved on the outer periphery of the end of the heat exchange plate 40, and an inner wall surface of the fluid-collecting portion 62 is welded, bonded, or clamped to an outer wall surface of the heat exchange plate 40.

In the above solutions, the heat exchange medium flows from the connecting pipe 611 into the fluid-collecting portion 62, and then enters the heat exchange channels 40a of the heat exchange plate 40 from the liquid inlet 400a. Adjacent first fluid collectors 60 can be connected by the connecting pipes 611, and the battery cells 20 can be disposed between the first fluid collectors 60 to implement heat exchange on two opposite sides of the battery cells 20 respectively, so as to improve the heat exchange efficiency.

The structural form of the connecting pipe 611 is not limited in the embodiments of the present application, which may be a single pipe or spliced from a plurality of pipes. The distance between two adjacent ones of the heat management assemblies 400 can be adjusted by changing the length of the connecting pipes 611 to adapt to the battery cells 20 with different sizes and improve the applicability of the heat management assemblies 400.

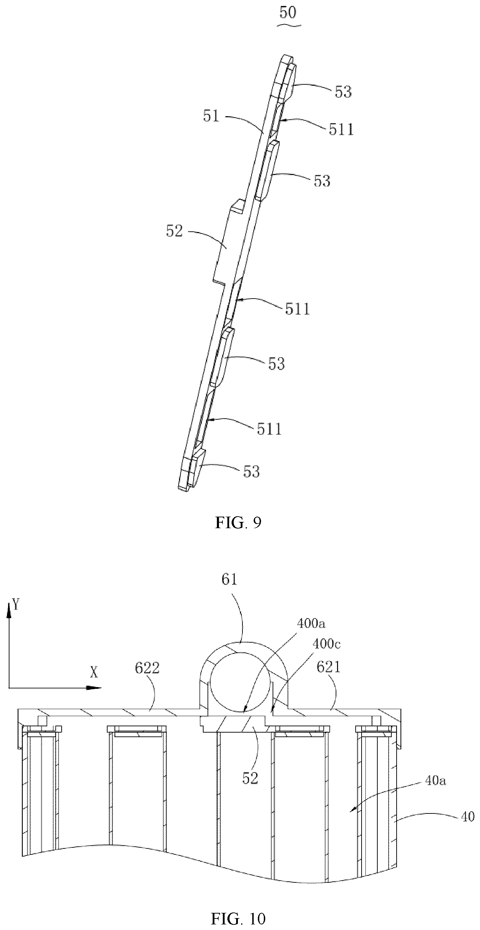

FIG. 8 is a schematic structural view of a first fluid collector in some embodiments of the present application; FIG. 9 is a schematic structural view of a first partition plate in some embodiments of the present application; and FIG. 10 is a partial side view of a heat management assembly in some embodiments of the present application.

Referring to FIG. 8 to FIG. 10, according to the invention, the first partition plate 50 includes a first plate body 51 and a first abutting portion 52, where the first abutting portion 52 protrudes from the first plate body 51 in a direction away from the heat exchange plate 40; the first plate body 51 is provided with first through holes 511 allowing the heat exchange medium to pass through, and the first abutting portion 52 is to block the portion of the liquid inlet 400a.

A plurality of first through holes 511 are provided, the plurality of first through holes 511 are spaced apart in the first direction X, and the heat exchange medium flows into the corresponding heat exchange channels 40a via the first through holes 511. The fluid-collecting portion 62 of the first fluid collector 60 includes a first side wall segment 621 and a second side wall segment 622 connected to two ends of the connecting portion 61 respectively, the first abutting portion 52 abuts against the second side wall segment 622, the first communication port 400c is formed between the first abutting portion 52 and the first side wall segment 621, and the heat exchange medium flows from the connecting portion 61 into the heat exchange channel 40a via the first communication port 400c. The first abutting portion 52 allows the heat exchange medium to flow into the heat exchange channels 40a only from one direction so that a channel in which the heat exchange channels 40a are connected in series is formed.

In the above solutions, the first abutting portion 52 protruding from the first partition plate 50 blocks a portion of the liquid inlet 400a, which achieves a simple structure and can reduce costs.

In some embodiments, the first plate body 51 blocks part of the heat exchange channels 40a, so that the blocked heat exchange channels 40a can be connected in series with the other heat exchange channels 40a, which can provide more series connection methods and improve the temperature uniformity of the battery cells 20.

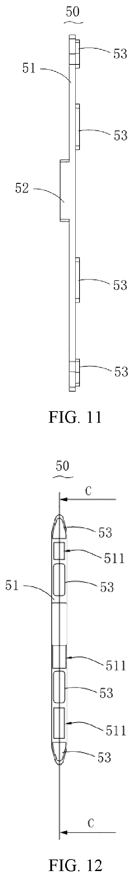

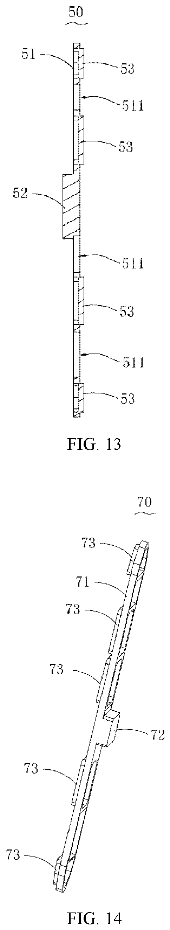

FIG. 11 is a side view of a first partition plate in some embodiments of the present application; FIG. 12 is a side view of the first partition plate in some embodiments of the present application from another perspective; and FIG. 13 is a cross-sectional view of FIG. 12 along a C-C direction.

Referring to FIG. 11 to FIG. 13, in some embodiments, the first plate body 51 is provided with first insertion portions 53 protruding in a direction away from the first abutting portion 52, and the first insertion portions 53 are inserted into the blocked heat exchange channels 40a.

The first insertion portion 53 may be in interference fit with the heat exchange channels 40a, or the first insertion portion 53 and the heat exchange channels 40a may be fixed by bonding. The first insertion portions 53 and the first through holes 511 may be disposed alternately in the first direction X or arranged irregularly. The quantity and positions of the blocked heat exchange channels 40a may be selected according to needs.

In the above solutions, the first insertion portions 53 disposed on the first partition plate 50 are inserted into the heat exchange channels 40a, which can block the heat exchange channels 40a and assemble the first partition plate 50 onto the heat exchange plate 40 to achieve initial positioning between the first partition plate 50 and the heat exchange plate 40.

In related technology, because the heat exchange channels 40a at the end of the heat exchange plate 40 in the first direction X have relatively weak structural strength and are prone to compression or collision damage, the heat exchange channel 40a at an edge is relatively fragile, and the heat exchange medium in the heat exchange channel 40a is prone to leakage.

In some embodiments of the present application, the first plate body 51 blocks the heat exchange channels 40a located at the end of the heat exchange plate 40 in the first direction X. A first insertion portion 53 may also be provided at the end of the first plate body 51 in the first direction X, namely, a first insertion portion 53 may also be provided at the edge of the first plate body in the first direction X, and the first insertion portion 53 is inserted into the heat exchange channel 40a at the edge of the heat exchange plate 40 in the first direction to block the heat exchange channel 40a at the edge of the heat exchange plate 40. In the embodiments, the strength of the edge of the heat exchange plate 40 can be enhanced, and the probability of leakage of the heat exchange medium due to the breakage of the edge of the heat exchange plate 40 can be reduced.

Optionally, the first plate body 51 may block the heat exchange channels 40a at one end in the first direction X, or block the heat exchange channels 40a at two ends in the first direction X, so as to further reduce the probability of leakage of the heat exchange medium.

In some embodiments, the heat management assembly 400 further includes a second partition plate 70, the second partition plate 70 is disposed at the other end of the heat exchange plate 40 in the second direction Y, and the second partition plate 70 is to block a portion of the liquid outlet 400b.

The second partition plate 70 and the heat exchange plate 40 may be fixed by welding, bonding, clamping, etc. A fluid collector may be disposed at an end of the heat exchange plate 40, the heat exchange medium flows into the heat exchange channels 40a of the heat exchange plate 40 through the fluid collector, and the liquid outlet 400b is located in the fluid collector. Alternatively, the fluid collector may be eliminated, the heat exchange plate 40 is directly connected to a side beam of the battery box 100, and the liquid outlet 400b is disposed on the side beam.

The second partition plate 70 blocks the portion of the liquid outlet 400b, and the unblocked portion of the liquid outlet 400b is a second communication port 400d. The heat exchange medium enters one or several heat exchange channels 40a from the first communication port 400c, and then passes through the heat exchange channels 40a connected in series thereto, and finally flows out from the second communication port 400d.

In the above solutions, the cooperation between the first partition plate 50 and the second partition plate 70 facilitates the series connection of more heat exchange channels 40a.

In some embodiments, the heat management assembly 400 further includes a second fluid collector 80 formed with the liquid outlet 400b, and the second partition plate 70 is disposed between the second fluid collector 80 and the heat exchange plate 40.

The first fluid collector 60 and the second fluid collector 80 are disposed at two ends of the heat exchange plate 40 in the second direction Y, respectively. The second fluid collector 80, the second partition plate 70, and the heat exchange plate 40 may be fixed by welding, bonding, clamping, or interference fit.

In the above solutions, the heat exchange medium in the heat exchange channels 40a flows into the second fluid collector 80 from the second communication port 400d, where the second fluid collector 80 has the function of collecting the heat exchange medium, which facilitates the transmission of the heat exchange medium.

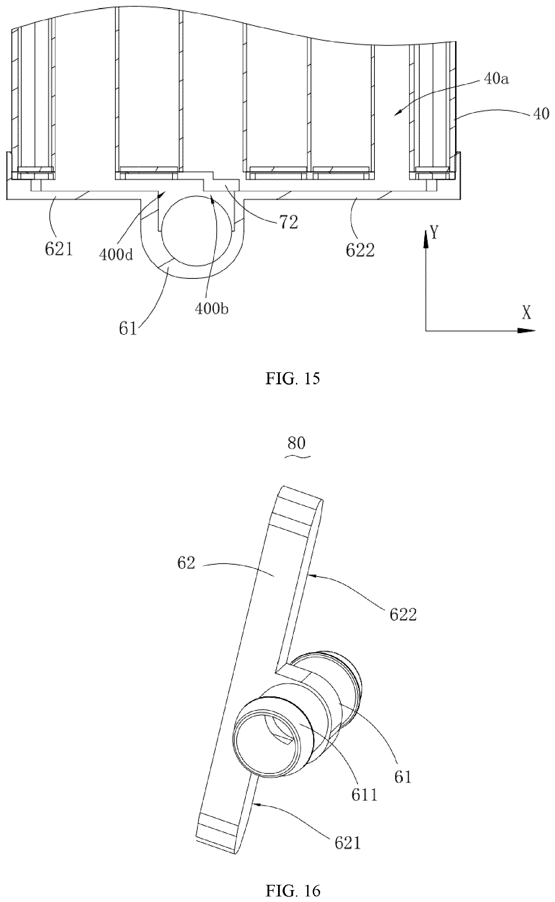

FIG. 14 is a schematic structural view of a second partition plate in some embodiments of the present application; FIG. 15 is another partial side view of the heat management assembly in some embodiments of the present application; and FIG. 16 is a schematic structural view of a second fluid collector in some embodiments of the present application.

Referring to FIG. 14 to FIG. 16, in some embodiments, the second partition plate 70 includes a second plate body 71 and a second abutting portion 72, where the second abutting portion 72 protrudes from the second plate body 71 in a direction towards the second fluid collector 80; the second plate body 71 is provided with second through holes allowing the heat exchange medium to pass through, and the second abutting portion 72 is to block a portion of the liquid outlet 400b.

A plurality of second through holes are provided, the plurality of second through holes are spaced apart in the first direction X, and the heat exchange medium flows into the second fluid collector 80 via the second through holes. The structure of the second fluid collector 80 may refer to the structure of the first fluid collector 60, and the way in which the second abutting portion 72 blocks the liquid outlet 400b may also refer to the way in which the first abutting portion 52 blocks the liquid inlet 400a. The second fluid collector 80 also includes a connecting portion 61 and a fluid-collecting portion 62 connected to each other, the fluid-collecting portion 62 also includes a first side wall segment 621 and a second side wall segment 622 connected to two ends of the connecting portion 61 respectively, the second abutting portion 72 abuts against the second side wall segment 622 of the second fluid collector 80, the second communication port 400d is formed between the second abutting portion 72 and the second side wall segment 622 of the second fluid collector 80, and the heat exchange medium flows into the connecting portion 61 of the second fluid collector 80 via the second communication port 400d from the heat exchange channels 40a. The second abutting portion 72 allows the heat exchange medium to flow out only from one direction so that a channel in which the heat exchange channels 40a are connected in series is formed.

In the above solutions, the second abutting portion 72 protruding from the second partition plate 70 blocks a portion of the liquid outlet 400b, which achieves a simple structure and can reduce costs.

In some embodiments, the first fluid collector 60 and the second fluid collector 80 are in reflective symmetry with respect to the heat exchange plate 40. In the first direction X, the connecting portion 61 of the first fluid collector 60 is misaligned with the connecting portion 61 of the second fluid collector 80, but the structures of the first fluid collector 60 and the second fluid collector 80 are essentially the same. During assembly, the first fluid collector 60 can be directly horizontally flipped by 180 degrees to form the second fluid collector 80.

In the above solutions, the heat exchange channels 40a can be easily connected in series, and the first fluid collector 60 and the second fluid collector 80 having the same structure are flipped during assembly, so the first fluid collector 60 and the second fluid collector 80 that are different are not needed, which facilitates process production, improves production efficiency, and reduces costs.

In some embodiments, the first partition plate 50 and the second partition plate 70 block two ends of the part of the heat exchange channels 40a respectively.

That is, the first partition plate 50 and the second partition plate 70 block one or several heat exchange channels 40, so that the heat exchange medium completely does not flow through these heat exchange channels 40a. The blocking method of the second partition plate 70 may be the same as that of the first partition plate 50. For example, the second partition plate 70 is also provided with second insertion portions 73 having the same structure as the first insertion portions 53.

The first partition plate 50 and the second partition plate 70 may be roughly the same in structure, but not completely symmetrical. For example, the first abutting portion 52 on the first partition plate 50 and the second abutting portion 72 on the second partition plate 70 may be different in longitudinal cross-sectional area and position.

In the above solutions, the first partition plate 50 and the second partition plate 70 block the two ends of the part of the heat exchange channels 40a respectively, which can reduce the usage amount of the heat exchange medium, energy consumption, and the weight of the heat exchange plate 40.

Optionally, the first partition plate 50 and the second partition plate 70 block the heat exchange channels 40a at two ends of the heat exchange plate 40 in the first direction X, namely, block the heat exchange channels 40a at the edges of the heat exchange plate 40, so as to reduce the probability of leakage of the heat exchange medium.

In a second aspect, an embodiment of the present application provides a battery 100, including battery cells 20 and the heat management assembly 400 according to any of the above implementations, where the heat management assembly 400 is to adjust the temperature of the battery cells 20.

In some embodiments, the battery comprises a plurality of heat management assemblies 400 spaced apart, and the battery cells 20 each are disposed between two adjacent ones of the heat management assemblies 400, which can exchange heat on two opposite sides of the battery cells 20 to improve heat exchange efficiency.

In a third aspect, an embodiment of the present application provides an electrical apparatus, including the battery 100 according to any of the above implementations for providing electrical energy.

According to some embodiments of the present application, the present application provides a heat management assembly 400, the heat management assembly 400 has a liquid inlet 400a and a liquid outlet 400b, the heat management assembly 400 includes a heat exchange plate 40 and a first partition plate 50, the heat exchange plate 40 is formed with a plurality of heat exchange channels 40a that are arranged in a first direction X and allow a heat exchange medium to flow, the heat exchange channels 40a extend in a second direction Y, and the first direction X intersects with the second direction Y; the first partition plate 50 is disposed at one end of the heat exchange plate 40 in the second direction Y, and the first partition plate 50 is to block a portion of the liquid inlet 400a, so that at least part of the heat exchange channels 40a are connected in series with one another. The heat management assembly 400 further includes a first fluid collector 60 formed with the liquid inlet 400a, and the first partition plate 50 is disposed between the first fluid collector 60 and the heat exchange plate 40. The first partition plate 50 includes a first plate body 51 and a first abutting portion 52, where the first abutting portion 52 protrudes from the first plate body 51 in a direction towards the first fluid collector 60; the first plate body 51 is provided with first through holes 511 allowing the heat exchange medium to pass through, and the first abutting portion 52 is to block the portion of the liquid inlet 400a.

Finally, it should be noted that the foregoing embodiments are only used to describe, but not to limit, the technical solutions of the present application. Although the present application is described in detail with reference to the foregoing embodiments, those skilled in the art should understand that they can still make modifications to the technical solutions described in the foregoing embodiments. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A heat management assembly (400) for a battery having a liquid inlet (400a) and a liquid outlet (400b), the heat management assembly (400) comprising:
a heat exchange plate (40) formed with a plurality of heat exchange channels (40a) that are arranged in a first direction (X) and allow a heat exchange medium to flow, wherein the heat exchange channels (40a) extend in a second direction (Y), and the first direction (X) intersects with the second direction (Y); and
a first partition plate (50) disposed at one end of the heat exchange plate (40) in the second direction (Y), wherein the first partition plate (50) blocks a portion of the liquid inlet (400a), so that at least part of the heat exchange channels (40a) are connected in series with one another,
**characterized in that**
the first partition plate (50) comprises a first plate body (51) and a first abutting portion (52), the first abutting portion (52) protruding from the first plate body (51) in a direction away from the heat exchange plate (40); and
the first plate body (51) is provided with first through holes (511) allowing the heat exchange medium to pass through, and the first abutting portion (52) is configured to block the portion of the liquid inlet (400a).

2. The heat management assembly (400) according to claim 1, wherein the heat management assembly (400) further comprises a first fluid collector (60) formed with the liquid inlet (400a), and the first partition plate (50) is disposed between the first fluid collector (60) and the heat exchange plate (40).

3. The heat management assembly (400) according to claim 2, wherein the first fluid collector (60) comprises a connecting portion (61) and a fluid-collecting portion (62) connected to each other, the connecting portion (61) is provided with a connecting pipe (611) allowing the heat exchange medium to pass through, and the liquid inlet (400a) is formed between the connecting portion (61) and the fluid-collecting portion (62).

4. The heat management assembly (400) according to any one of claims 1 to 3, wherein the first plate body (51) blocks part of the heat exchange channels (40a).

5. The heat management assembly (400) according to claim 4, wherein the first plate body (51) is provided with first insertion portions (53) protruding in a direction away from the first abutting portion (52), and the first insertion portions (53) are inserted into the blocked heat exchange channels (40a).

6. The heat management assembly (400) according to claim 4, wherein the first plate body (51) blocks the heat exchange channel (40a) located at an end of the heat exchange plate (40) in the first direction (X).

7. The heat management assembly (400) according to any one of claims 1-6, wherein the heat management assembly (400) further comprises a second partition plate (70), the second partition plate (70) is disposed at the other end of the heat exchange plate (40) in the second direction (Y), and the second partition plate (70) blocks a portion of the liquid outlet (400b).

8. The heat management assembly (400) according to claim 7, wherein the heat management assembly (400) further comprises a second fluid collector (80) formed with the liquid outlet (400b), and the second partition plate (70) is disposed between the second fluid collector (80) and the heat exchange plate (40).

9. The heat management assembly (400) according to claim 8, wherein the second partition plate (70) comprises a second plate body (71) and a second abutting portion (72), the second abutting portion (72) protruding from the second plate body (71) in a direction towards the second fluid collector (80); and
the second plate body (71) is provided with second through holes allowing the heat exchange medium to pass through, and the second abutting portion (72) is configured to block the portion of the liquid outlet (400b).

10. The heat management assembly (400) according to claim 8, wherein the first fluid collector (60) and the second fluid collector (80) are in reflective symmetry with respect to the heat exchange plate (40).

11. The heat management assembly (400) according to any one of claims 7-10, wherein the first partition plate (50) and the second partition plate (70) block two ends of the part of the heat exchange channels (40a) respectively.

12. A battery (100), comprising:
battery cells (20); and
the heat management assembly (400) according to any one of claims 1-11, the heat management assembly (400) is configured to adjust a temperature of the battery cells (20).

13. The battery (100) according to claim 12, wherein the battery (100) comprises a plurality of the heat management assemblies spaced apart, and the battery cells (20) each are disposed between two adjacent ones of the heat management assemblies.

14. An electrical apparatus, comprising the battery (100) according to claim 12 or 13 for providing electrical energy.

## Patentansprüche

1. Wärmemanagementanordnung (400) für eine Batterie, die einen Flüssigkeitseinlass (400a) und einen Flüssigkeitsauslass (400b) aufweist, wobei die Wärmemanagementanordnung (400) umfasst:
eine Wärmeaustauschplatte (40), die mit einer Mehrzahl von Wärmeaustauschkanälen (40a) ausgebildet ist, die in einer ersten Richtung (X) angeordnet sind und ein Strömen eines Wärmeaustauschmediums ermöglichen, wobei sich die Wärmeaustauschkanäle (40a) in einer zweiten Richtung (Y) erstrecken und die erste Richtung (X) die zweite Richtung (Y) schneidet; und
eine erste Trennplatte (50), die an einem Ende der Wärmeaustauschplatte (40) in der zweiten Richtung (Y) angeordnet ist, wobei die erste Trennplatte (50) einen Abschnitt des Flüssigkeitseinlasses (400a) blockiert, sodass zumindest ein Teil der Wärmeaustauschkanäle (40a) miteinander in Reihe verbunden ist,
**dadurch gekennzeichnet, dass**
die erste Trennplatte (50) einen ersten Plattenkörper (51) und einen ersten Anlageabschnitt (52) umfasst, wobei der erste Anlageabschnitt (52) von dem ersten Plattenkörper (51) in einer Richtung weg von der Wärmeaustauschplatte (40) vorsteht; und
der erste Plattenkörper (51) mit ersten Durchgangslöchern (511) versehen ist, die dem Wärmeaustauschmedium ein Hindurchtreten ermöglichen, und der erste Anlageabschnitt (52) dazu konfiguriert ist, den Abschnitt des Flüssigkeitseinlasses (400a) zu blockieren.

2. Wärmemanagementanordnung (400) nach Anspruch 1, wobei die Wärmemanagementanordnung (400) ferner einen ersten Fluidsammler (60) umfasst, der mit dem Flüssigkeitseinlass (400a) ausgebildet ist, und die erste Trennplatte (50) zwischen dem ersten Fluidsammler (60) und der Wärmeaustauschplatte (40) angeordnet ist.

3. Wärmemanagementanordnung (400) nach Anspruch 2, wobei der erste Fluidsammler (60) einen Verbindungsabschnitt (61) und einen Fluidsammelabschnitt (62) umfasst, die miteinander verbunden sind, wobei der Verbindungsabschnitt (61) mit einem Verbindungsrohr (611) versehen ist, das dem Wärmeaustauschmedium ein Hindurchtreten ermöglicht, und der Flüssigkeitseinlass (400a) zwischen dem Verbindungsabschnitt (61) und dem Fluidsammelabschnitt (62) ausgebildet ist.

4. Wärmemanagementanordnung (400) nach einem der Ansprüche 1 bis 3, wobei der erste Plattenkörper (51) einen Teil der Wärmeaustauschkanäle (40a) blockiert.

5. Wärmemanagementanordnung (400) nach Anspruch 4, wobei der erste Plattenkörper (51) mit ersten Einsteckabschnitten (53) versehen ist, die in einer Richtung weg von dem ersten Anlageabschnitt (52) vorstehen, und die ersten Einsteckabschnitte (53) in die blockierten Wärmeaustauschkanäle (40a) eingesteckt sind.

6. Wärmemanagementanordnung (400) nach Anspruch 4, wobei der erste Plattenkörper (51) den Wärmeaustauschkanal (40a) blockiert, der sich an einem Ende der Wärmeaustauschplatte (40) in der ersten Richtung (X) befindet.

7. Wärmemanagementanordnung (400) nach einem der Ansprüche 1 bis 6, wobei die Wärmemanagementanordnung (400) ferner eine zweite Trennplatte (70) umfasst, wobei die zweite Trennplatte (70) an dem anderen Ende der Wärmeaustauschplatte (40) in der zweiten Richtung (Y) angeordnet ist und die zweite Trennplatte (70) einen Abschnitt des Flüssigkeitsauslasses (400b) blockiert.

8. Wärmemanagementanordnung (400) nach Anspruch 7, wobei die Wärmemanagementanordnung (400) ferner einen zweiten Fluidsammler (80) umfasst, der mit dem Flüssigkeitsauslass (400b) ausgebildet ist, und die zweite Trennplatte (70) zwischen dem zweiten Fluidsammler (80) und der Wärmeaustauschplatte (40) angeordnet ist.

9. Wärmemanagementanordnung (400) nach Anspruch 8, wobei die zweite Trennplatte (70) einen zweiten Plattenkörper (71) und einen zweiten Anlageabschnitt (72) umfasst, wobei der zweite Anlageabschnitt (72) von dem zweiten Plattenkörper (71) in einer Richtung hin zu dem zweiten Fluidsammler (80) vorsteht; und
der zweite Plattenkörper (71) mit zweiten Durchgangslöchern versehen ist, die dem Wärmeaustauschmedium ein Hindurchtreten ermöglichen, und der zweite Anlageabschnitt (72) dazu konfiguriert ist, den Abschnitt des Flüssigkeitsauslasses (400b) zu blockieren.

10. Wärmemanagementanordnung (400) nach Anspruch 8, wobei der erste Fluidsammler (60) und der zweite Fluidsammler (80) in Bezug auf die Wärmeaustauschplatte (40) spiegelsymmetrisch sind.

11. Wärmemanagementanordnung (400) nach einem der Ansprüche 7 bis 10, wobei die erste Trennplatte (50) und die zweite Trennplatte (70) jeweils zwei Enden des Teils der Wärmeaustauschkanäle (40a) blockieren.

12. Batterie (100), umfassend:
Batteriezellen (20); und
die Wärmemanagementanordnung (400) nach einem der Ansprüche 1 bis 11, wobei die Wärmemanagementanordnung (400) dazu konfiguriert ist, eine Temperatur der Batteriezellen (20) einzustellen.

13. Batterie (100) nach Anspruch 12, wobei die Batterie (100) eine Mehrzahl der voneinander beabstandeten Wärmemanagementanordnungen umfasst und die Batteriezellen (20) jeweils zwischen zwei benachbarten der Wärmemanagementanordnungen angeordnet sind.

14. Elektrische Vorrichtung, umfassend die Batterie (100) nach Anspruch 12 oder 13 zum Bereitstellen elektrischer Energie.

## Revendications

1. Ensemble de gestion thermique (400) pour une batterie présentant une entrée de liquide (400a) et une sortie de liquide (400b), l'ensemble de gestion thermique (400) comprenant :
une plaque d'échange thermique (40) formée avec une pluralité de canaux d'échange thermique (40a) qui sont agencés dans une première direction (X) et permettent à un milieu d'échange thermique de s'écouler, les canaux d'échange thermique (40a) s'étendant dans une deuxième direction (Y), et la première direction (X) croisant la deuxième direction (Y) ; et
une première plaque de séparation (50) disposée à une extrémité de la plaque d'échange thermique (40) dans la deuxième direction (Y), la première plaque de séparation (50) bloquant une portion de l'entrée de liquide (400a), de sorte qu'au moins une partie des canaux d'échange thermique (40a) sont reliés en série les uns aux autres,
**caractérisé en ce que**
la première plaque de séparation (50) comprend un premier corps de plaque (51) et une première portion d'appui (52), la première portion d'appui (52) faisant saillie depuis le premier corps de plaque (51) dans une direction s'éloignant de la plaque d'échange thermique (40) ; et
le premier corps de plaque (51) est pourvu de premiers trous traversants (511) permettant au milieu d'échange thermique de passer à travers, et la première portion d'appui (52) est configurée pour bloquer la portion de l'entrée de liquide (400a).

2. Ensemble de gestion thermique (400) selon la revendication 1, dans lequel l'ensemble de gestion thermique (400) comprend en outre un premier collecteur de fluide (60) formé avec l'entrée de liquide (400a), et la première plaque de séparation (50) est disposée entre le premier collecteur de fluide (60) et la plaque d'échange thermique (40).

3. Ensemble de gestion thermique (400) selon la revendication 2, dans lequel le premier collecteur de fluide (60) comprend une portion de liaison (61) et une portion de collecte de fluide (62) reliées l'une à l'autre, la portion de liaison (61) est pourvue d'un tuyau de liaison (611) permettant au milieu d'échange thermique de passer à travers, et l'entrée de liquide (400a) est formée entre la portion de liaison (61) et la portion de collecte de fluide (62).

4. Ensemble de gestion thermique (400) selon l'une quelconque des revendications 1 à 3, dans lequel le premier corps de plaque (51) bloque une partie des canaux d'échange thermique (40a).

5. Ensemble de gestion thermique (400) selon la revendication 4, dans lequel le premier corps de plaque (51) est pourvu de premières portions d'insertion (53) faisant saillie dans une direction s'éloignant de la première portion d'appui (52), et les premières portions d'insertion (53) sont insérées dans les canaux d'échange thermique (40a) bloqués.

6. Ensemble de gestion thermique (400) selon la revendication 4, dans lequel le premier corps de plaque (51) bloque le canal d'échange thermique (40a) situé à une extrémité de la plaque d'échange thermique (40) dans la première direction (X).

7. Ensemble de gestion thermique (400) selon l'une quelconque des revendications 1 à 6, dans lequel l'ensemble de gestion thermique (400) comprend en outre une deuxième plaque de séparation (70), la deuxième plaque de séparation (70) est disposée à l'autre extrémité de la plaque d'échange thermique (40) dans la deuxième direction (Y), et la deuxième plaque de séparation (70) bloque une portion de la sortie de liquide (400b).

8. Ensemble de gestion thermique (400) selon la revendication 7, dans lequel l'ensemble de gestion thermique (400) comprend en outre un deuxième collecteur de fluide (80) formé avec la sortie de liquide (400b), et la deuxième plaque de séparation (70) est disposée entre le deuxième collecteur de fluide (80) et la plaque d'échange thermique (40).

9. Ensemble de gestion thermique (400) selon la revendication 8, dans lequel la deuxième plaque de séparation (70) comprend un deuxième corps de plaque (71) et une deuxième portion d'appui (72), la deuxième portion d'appui (72) faisant saillie depuis le deuxième corps de plaque (71) dans une direction vers le deuxième collecteur de fluide (80) ; et
le deuxième corps de plaque (71) est pourvu de deuxièmes trous traversants permettant au milieu d'échange thermique de passer à travers, et la deuxième portion d'appui (72) est configurée pour bloquer la portion de la sortie de liquide (400b).

10. Ensemble de gestion thermique (400) selon la revendication 8, dans lequel le premier collecteur de fluide (60) et le deuxième collecteur de fluide (80) sont en symétrie miroir par rapport à la plaque d'échange thermique (40).

11. Ensemble de gestion thermique (400) selon l'une quelconque des revendications 7 à 10, dans lequel la première plaque de séparation (50) et la deuxième plaque de séparation (70) bloquent respectivement deux extrémités de la partie des canaux d'échange thermique (40a).

12. Batterie (100), comprenant :
des cellules de batterie (20) ; et
l'ensemble de gestion thermique (400) selon l'une quelconque des revendications 1 à 11, l'ensemble de gestion thermique (400) étant configuré pour ajuster une température des cellules de batterie (20).

13. Batterie (100) selon la revendication 12, dans laquelle la batterie (100) comprend une pluralité des ensembles de gestion thermique espacés les uns des autres, et les cellules de batterie (20) sont chacune disposées entre deux ensembles adjacents des ensembles de gestion thermique.

14. Appareil électrique, comprenant la batterie (100) selon la revendication 12 ou 13 pour fournir de l'énergie électrique.
